# EUROPEAN PATENT SPECIFICATION

(11) **EP 4 091 837 B1**
(45) Date of publication and mention of the grant of the patent: **13.03.2024**
(21) Application number: 22172298.6
(22) Date of filing: 09.05.2022
(51) Int. Cl.: B60C 9/07, B60C 9/10, B60C 11/00, B60C 9/06

(54) **MOTORCYCLE TIRE**
MOTORRADREIFEN
PNEUMATIQUE DE MOTOCYCLETTE

(30) Priority: 19.05.2021 JP 2021084805
(43) Date of publication of application: 23.11.2022
(73) Proprietor: Sumitomo Rubber Industries, Ltd., Kobe-shi, Hyogo-ken 651-0072 (JP)
(72) Inventor: UEDA, Yoshimasa, Kobe-shi 651-0072 (JP)
(74) Representative: Manitz Finsterwald Patent- und Rechtsanwaltspartnerschaft mbB

(56) References cited:
- EP-B1- 3 466 718
- US-A1- 2016 339 747

## Description

### BACKGROUND OF THE INVENTION

### FIELD OF THE INVENTION

The present invention relates to a motorcycle tire.

### BACKGROUND ART

The following Patent Document 1 discloses a motorcycle tire in which the tread portion is divided into a pair of axially outer shoulder portions and a center portion therebetween, and
the ratio (tan δ1/tan δ2) of the loss tangent (tan δ1) of a tread rubber of the center portion at 0 deg C to the loss tangent (tan δ2) of a tread rubber of the shoulder portions at 0 deg C, is set to be larger than 1.0. Such motorcycle tire is described as exhibiting high wet grip performance.
Patent Document 1: International application publication No. WO2017/204236A1

A motorcycle tire in accordance with the preamble of claim 1 is known from US 2016/339747 A1. A related motorcycle tire is known from EP 3 466 718 B1.

### SUMMARY OF THE INVENTION

### PROBLEMS TO BE SOLVED BY THE INVENTION

In recent years, on the other hand, motorcycle tires are required to exert improved wet performance as well as improved turning performance. Under such circumstances, the motorcycle tire disclosed in the Patent Document 1 has room for improvement in turning performance.

In view of the above circumstances, the present invention was made and an object of the present invention is to provide a motorcycle tire having improved turning performance and wet performance.

### MEANS FOR SOLVING THE PROBLEMS

The object is solved by a tire having the features of claim 1. Sub claims are directed to preferred embodiments.

According to the present invention, a motorcycle tire comprises: a tread portion having a pair of tread edges; a pair of sidewall portions; a pair of bead portions; a carcass having a bias structure and extending between the bead portions; a band disposed radially outside the carcass in the tread portion; and a tread rubber disposed radially outside the band, wherein
the tread portion comprises a crown region including a tire equator, and a pair of shoulder regions respectively including the tread edges,
the carcass comprises a plurality of carcass plies of carcass cords, including an outer carcass ply which is radially outermost in the tread portion in the carcass plies,
the band comprises a jointless band ply composed of at least one band cord wound spirally and circumferentially of the tire at 5 degrees or less with respect to the tire circumferential direction,
a loss tangent of the tread rubber at a temperature of 0 deg C is larger in the crown region than in the shoulder regions,
angles of the carcass cords of the outer carcass ply with respect to the tire circumferential direction are smaller in the crown region than in the shoulder regions.

According to an embodiment of the invention, the angles of the carcass cords of the outer carcass ply with respect to the tire circumferential direction are in a range from 20 to 65 degrees.

According to an embodiment of the invention, the shoulder regions extend axially inwardly from the respective tread edges by at least 20 mm when measured along the tread surface.

According to an embodiment of the invention, a loss tangent of the tread rubber at a temperature of 70 deg C is smaller in the crown region than in the shoulder regions.

According to an embodiment of the invention, the glass-transition temperature of the tread rubber is in a range from -20 deg C to 5 deg C.

According to an embodiment of the invention, the glass-transition temperature of the tread rubber is lower in the crown region than in the shoulder regions.

According to an embodiment of the invention, a complex elastic modulus of the tread rubber at a temperature of 0 deg is smaller in the crown region than in the shoulder regions.

According to an embodiment of the invention, the ratio (E*i at 0 deg C / E*o at 0 deg C) of the complex elastic modulus E*i of the tread rubber at 0 deg C in the crown region to the complex elastic modulus E*o of the tread rubber at 0 deg C in the shoulder regions, is not more than 0.95.

According to an embodiment of the invention, the ratio (θc / θs) of the angle θc of the carcass cords in the crown region to the angle θs of the carcass cords in the shoulder regions, is in a range from 0.35 to 0.90.

According to an embodiment of the invention, the tread rubber contains silica.

According to an embodiment of the invention, the outer carcass ply extends between the bead portions without being turned up in the bead portions.

According to an embodiment of the invention, the carcass plies include an inner carcass ply which is, in the tread portion, positioned on the radially inside of the outer carcass ply, and the inner carcass ply extends between the bead portions and is turned up in each bead portion around a bead core disposed therein from the inside to the outside in the tire axial direction so as to form a pair of turnup portions and a main portion therebetween.

### BRIEF DESCRIPTION OF THE DRAWINGS

FIG. 1 is a cross-sectional view of a motorcycle tire as an embodiment of the present invention.
FIG. 2 is a schematic developed partial view of an internal reinforcing structure in the tread portion of FIG. 1.

### DETAILED DESCRIPTION OF THE INVENTION

An embodiment of the present invention will now be described in detail in conjunction with accompanying drawings.

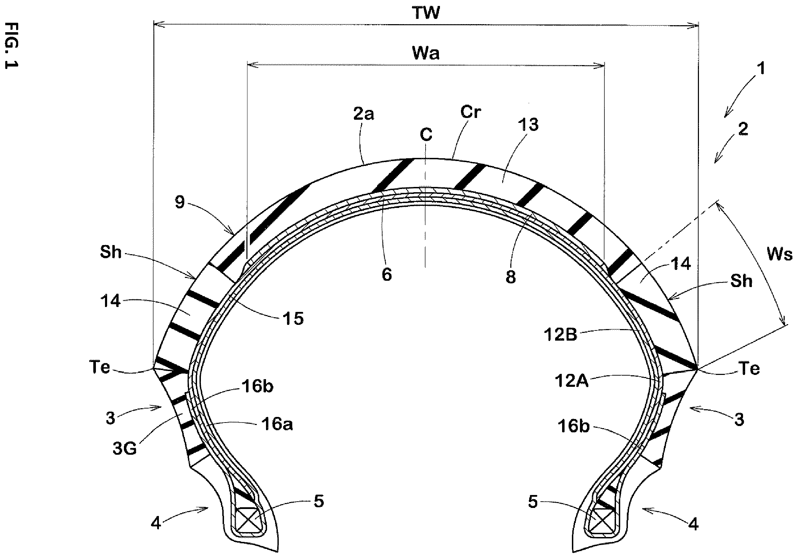

FIG. 1 is a tire meridian sectional view including the tire rotation axis (not shown) of a motorcycle tire 1 as an embodiment of the invention under its normal state.

In the present embodiment of the invention, the tire 1 is designed to be suitable for running on roads such as asphalt-paved roads. The present invention is however, not limited to tires for such usage.

The "normal state" is a state of a tire which is mounted on a normal rim (not shown) and inflated to a normal internal pressure, but no tire load is applied thereto.

In the present application, dimensions, positions and the like relating to the tire 1 refer to those under the normal state unless otherwise noted.

The "normal rim" is a wheel rim specified for the tire by a standard included in a standardization system on which the tire is based, for example, the "normal wheel rim" in JATMA, "Design Rim" in TRA, and "Measuring Rim" in ETRTO.

The "normal internal pressure" is air pressure specified for the tire by a standard included in a standardization system on which the tire is based, for example, the "maximum air pressure" in JATMA, maximum value listed in the "TIRE LOAD LIMITS AT VARIOUS COLD INFLATION PRESSURES" table in TRA, and "INFLATION PRESSURE" in ETRTO.

In the tire 1 according to the present embodiment of the invention, as shown in FIG. 1, the tread portion 2 and the tread surface 2a are curved convexly toward the radially outside of the tire in an arc shape in the meridian cross section of the tire.

The tire 1 comprises a tread portion 2 with tread edges, a pair of axially spaced bead portions 4, and a pair of sidewall portions 3 extending from the tread edges to the bead portions 4.

The tread portion 2 comprises a crown region Cr centered on the tire equator C and extending toward both sides in the tire axial direction from the tire equator C, and a pair of shoulder regions Sh extending axially inwardly from the respective tread edges Te.

Each of the shoulder regions Sh has a width Ws of not less than 20 mm axially inwardly from the tread edge Te along the tread surface 2a.

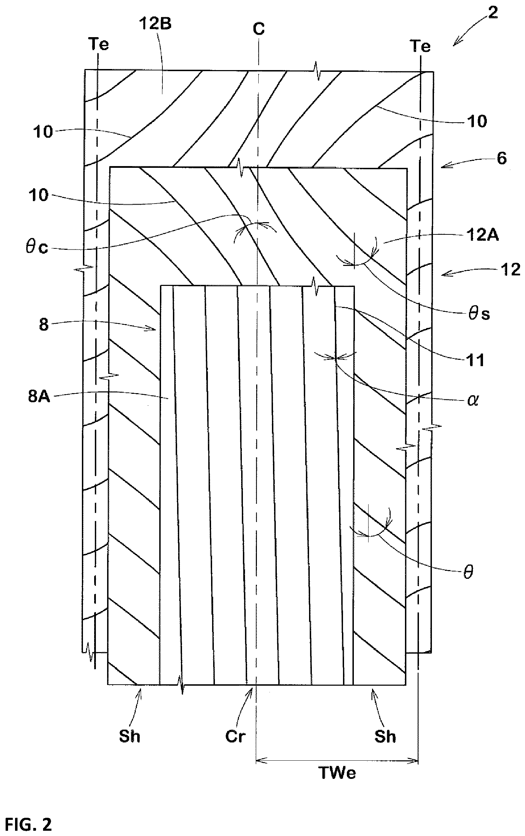

The width Ws is preferably not more than 50% of a half developed tread width TWe (shown in FIG. 2). The half developed tread width TWe is the distance from the tire equator C to the tread edge Te when the tread surface is developed.

In the present embodiment of the invention, the shoulder regions Sh are extended to the crown region Cr.

The sidewall portions 3 extend radially inwardly from the respective tread edges of the tread portion 2.

Each of the sidewall portions 3 is provided with a sidewall rubber 3G.

The bead portions 4 extend radially inwardly from the respective sidewall portions 3, and each of the bead portions 4 is provided with a bead core 5 embedded therein.

The tire 1 is provided with: a toroidal carcass 6 extending between the bead portions 4 through the tread portion and the sidewall portions; a band 8 disposed radially outside the carcass 6 in the tread portion 2; and a tread rubber 9 disposed on the radially outside of the band 8.

FIG.2 is a developed view of the internal reinforcing structure in the tread portion 2. In the inventive tire, as shown in FIG.2, the carcass 6 has a bias ply structure. The bias ply structure is a structure in which a plurality of carcass cords 10 are inclined with respect to the tire radial direction. The carcass 6 is composed of at least two carcass plies 12 of carcass cords 10.

In the inventive tire, the carcass plies 12 include an outer carcass ply 12A which is radially outermost in the carcass plies 12 in the tread portion. In the outer carcass ply 12A, the carcass cords in each shoulder region Sh have an angle θs with respect to the tire circumferential direction, and the carcass cords in the crown region Cr have an angle θc with respect to the tire circumferential direction which is smaller than the angle θs.

As a result, a large cornering force is generated in the shoulder region Sh which comes into contact with the ground during cornering, therefore, the cornering performance is improved.

The ratio (θc / θs) of the angle θc to the angle θs is preferably set in a range from 0.35 to 0.90. Thereby, the cornering force can be prevented from increasing abruptly when leaning the motorcycle to initiate cornering, and the light response when leaning the motorcycle can be maintained so that excellent turning performance is exhibited.

In order to effectively derive such advantage effects, the ratio (θc / θs) is more preferably not less than 0.5, but not more than 0.75. In this case, the value of the angle θc is measured at the tire equator C, and the value of the angle θs is measured at a position which is 20 mm inward in the tire axially direction from each tread edge Te along the tread surface 2a.

In the inventive tire, the band 8 is a so-called jointless band composed of at least one ply 8A of a band cord or cords 11 wound spirally, circumferentially of the tire at an angle α of not more than 5 degrees with respect to the tire circumferential direction.

The band 8 suppresses an increase of the tire outer diameter and improves the stability during high-speed straight running.

As shown in FIG. 1, the width Wa of the band 8 measured in the tire axial direction is preferably set in a range from 60% to 95% of the tread width TW measured between the tread edges Te in the tire axial direction.

The tread portion 2 is provided with a tread rubber 9 extending between the tread edges Te so as to forms the tread surface 2a.

In the present embodiment of the invention, as shown in FIG. 1, the tread rubber 9 includes
a crown tread rubber portion 13 disposed in a crown region Cr, and a shoulder tread rubber portion 14 disposed in each shoulder regions Sh.

In the present embodiment of the invention, the shoulder tread rubber portion 14 is connected with the sidewall rubber 3G.

The crown tread rubber portion 13 and the shoulder tread rubber portion 14 are made of different rubber compounds.

Generally, a bias tire having a bias ply structure is superior in turning performance to a radial tire having a radial ply structure, but the effect of the superior turning performance of such a bias tire is difficult to be exhibited on wet roads. On the other hand, the atmosphere temperature on a wet road surface is lower than that on a dry road surface.

In the inventive tire, the shoulder tread rubber portion 14 has a loss tangent (tan δo) at 0 deg C, and the crown tread rubber portion 13 has a loss tangent (tan δi) at 0 deg C which is larger than the loss tangent (tan δo) at 0 deg C of the shoulder tread rubber portion 14. As a result, wet performance, particularly wet braking performance during straight running is improved since the crown region Cr mainly contacts with the ground during straight running. In particular, a bias tire having excellent characteristics for running on rough roads, will have a great merit of improving the wet performance. Further, since the angle θs is larger than the angle θc, the flexibility of the tread portion is improved and the ground contacting patch is increased, so that the cornering force is increased, and the cornering performance is improved in the tire 1 having a bias ply structure particularly.

When the loss tangent tan δi at 0 deg C of the crown tread rubber portion is excessively larger than the loss tangent tan δo at 0 deg C of the shoulder tread rubber portions, the deformation of the crown region Cr during running becomes large, and the stability performance at high-speed running may deteriorate. Further, the rigidity of the shoulder tread rubber portion 14 becomes excessively small, which may deteriorate the turning performance. Therefore, the loss tangent tan δi at 0 deg C is set to be larger than the loss tangent tan δo at 0 deg C, and the difference (tan δi at 0 deg C - tan δo at 0 deg C) therebetween is preferably set to be not less than 0.2, more preferably not less than 0.4, but preferably not more than 1.0, more preferably not more than 0.7.

A motorcycle is leaned during turning. Under favorable conditions where the atmosphere temperature is relatively high and the road surface is dry, the leaning can be increased, and the shoulder region Sh contacts with the ground. Therefore, the loss tangent tan δo of the shoulder tread rubber portion 14 at 70 deg C is set to be larger than the loss tangent tan δi of the crown tread rubber portion 13 at 70 deg C. As a result, when running on a dry asphalt road surface, the ground contact during cornering is improved to improve the cornering performance. At the same time, heat generation in the crown region Cr is suppressed, and the stability performance during high-speed running is maintained high.

In order to effectively derive these advantageous effects, the loss tangent tan δi at 70 deg C is preferably set to be smaller than the loss tangent tan δo at 70 deg C, and the difference (tan δo at 70 deg C - tan δi at 70 deg C) therebetween is preferably set to be not less than 0.02, more preferably not less than 0.04, but preferably not more than 0.1, more preferably not more than 0.07.

In order to manufacture such crown tread rubber portion 13 and shoulder tread rubber portion 14, the content of carbon black added to the crown tread rubber portion 13 is adjusted to be less than the content of carbon black added to the shoulder tread rubber portion 14.

In this application, the loss tangent and the complex elastic modulus are measured under the following conditions (frequency 5 Hz, initial strain 10%, dynamic strain +/-2.5%, and measuring sample dimensions 20x4xlmm (length x width x thickness)), using a dynamic viscoelasticity measuring device (EPLEXOR manufactured by GABO).

The measuring sample is took out from the tread rubber 9 so that the length direction of the sample coincides the tire circumferential direction.

It is preferable that the glass-transition temperature Tg of the tread rubber 9 is in a range from -20 to 5 deg C.

By setting the glass-transition temperature Tg to -20 deg C or higher, the wet braking performance can be improved. On the other hand, by setting the glass-transition temperature Tg to 5 deg C or lower, excessive deformation during running is suppressed, and the cornering performance and stability performance during high-speed running can be improved.

In order to manufacture such crown tread rubber portion 13 and shoulder tread rubber portion 14, an aromatic petroleum resin is added.

The glass-transition temperature is measured according to Japanese Industrial Standard JIS-K7121 while raising the temperature at a heating rate of 10 deg C/min, for example, using a differential scanning calorimeter (Model Q200 manufactured by TA Instruments Japan Co., Ltd.).

It is preferable that the glass-transition temperature Tg1 of the crown tread rubber portion 13 is set to be lower than the glass-transition temperature Tg2 of the shoulder tread rubber portion 14. By setting the Tg1 lower than the Tg2, the turning performance is improved since the ground contact of the shoulder region Sh is improved owing to the deformation of the shoulder tread rubber portion 14, and further, the wet braking performance obtained from the crown region Cr is maintained.

In order to manufacture such crown tread rubber portion 13 and shoulder tread rubber portion 14, an aromatic petroleum resin is used, and the content of the aromatic petroleum resin added in the crown tread rubber portion 13 is set to be less than that in the shoulder tread rubber portion 14.

In order to effectively derive the above-mentioned advantageous effects, it is preferred that the difference (Tg2-Tg1) of the glass-transition temperature Tg2 of the shoulder tread rubber portion 14 from the glass-transition temperature Tg1 of the crown tread rubber portion 13 is not lower than 3 deg C, more preferably not lower than 5 deg C, but not higher than 10 deg C, more preferably not higher than 8 deg C.

The complex elastic modulus (E*i at 0 deg C) of the crown tread rubber portion 13 at the temperature of 0 deg C is set to be smaller than the complex elastic modulus (E*o at 0 deg C) of the shoulder tread rubber portion 14 at the temperature of 0 deg C, and the difference (E*o at 0 deg C - E*i at 0 deg C) therebetween is preferably not less than 5 MPa, more preferably not less than 10 MPa, but preferably not more than 20 MPa, more preferably not more than 15 MPa. As a result, both wet performance and cornering performance can be achieved at a high level.

In order to manufacture such crown tread rubber portion 13 and shoulder tread rubber portion 14, oil is added to the crown tread rubber portion 13 more than the shoulder tread rubber portions 14.

In order to effectively derive the above described advantageous effects, the ratio (E*i at 0 deg C / E*o at 0 deg C) of the complex elastic modulus (E*i at 0 deg C) to the complex elastic modulus (E*o at 0 deg C) is preferably set to be not more than 0.95. If the ratio (E*i at 0 deg C / E*o at 0 deg C) is excessively small, the wet performance may deteriorate. Therefore, the ratio (E*i at 0 deg C / E*o at 0 deg C) is more preferably not less than 0.75, still more preferably not less than 0.80, but preferably not more than 0.90.

In the present embodiment of the invention, the tread rubber 9 contains silica.

The silica content is preferably not less than 80 % by mass. Such silica increases the adhesion between the tread rubber 9 and a wet road surface owing to the silanol group, and improves the wet braking performance.

It is preferable that the silica content of the crown tread rubber portion 13 is larger than the silica content of the shoulder tread rubber portions 14. And the difference therebetween is preferably not less than 3% by mass, more preferably not less than 5% by mass, but preferably not more than 10% by mass, more preferably not more than 8% by mass.

In the present embodiment of the invention, as shown in FIG.2, the carcass plies 12 further includes an inner carcass ply 12B disposed on the radially inside in the tread portion, of the outer carcass ply 12A. The carcass cords 10 of the outer carcass ply 12A intersect the carcass cords 10 of the inner carcass ply 12B. In each of the carcass plies 12A and 12B, the angles θ of the carcass cords 10 with respect to the tire circumferential direction are gradually increased from the tire equator C toward the tread edges Te on both sides.

The angles θ of the carcass cords 10 with respect to the tire circumferential direction are preferably not less than 20 degrees, more preferably not less than 30 degrees, but preferably not more than 65 degrees, more preferably not more than 55 degrees. As a result, it becomes possible to generate a large camber thrust, and the cornering performance is improved.

In the present embodiment of the invention, organic fiber cords are employed as the carcass cords 10.

In the present embodiment of the invention, as shown in FIG. 1, the inner carcass ply 12B is turned up in the bead portions 4, but the outer carcass ply 12A is not turned up in the bead portions 4.

More specifically, the inner carcass ply 12B extends between the bead portions 4 through the tread portion 2 and sidewall portions 3, and is turned up around the bead core 5 in each of the bead portions 4 from the inside to the outside in the tire axial direction so as to form a pair of turnup portions 16b and a main portion 16a therebetween.

However, the outer carcass ply 12A extends between the bead portions 4 through the tread portion 2 and sidewall portions 3, and is terminated in the bead portions 4 without being turned up. Thus, the outer carcass ply 12A is composed of only a main portion 15 extending between the bead portions 4. On the axially outer sides of the outer carcass ply 12A ranging from the bead portions to the sidewall portions, there are disposed the turnup portions 16b. In such carcass structure, the outer carcass ply 12A can prevent the lateral spring stiffness of the tire 1 from becoming excessively high, so riding comfort performance and turning performance are improved. And the inner carcass ply 12B can improve high-speed stability performance.

While detailed description has been made of a preferable embodiment of the present invention, the present invention can be embodied in various forms within the scope of the appended claims.

### Comparison tests

Based on the structure shown in FIG. 1, motorcycle tires were experimentally manufactured as test tires (Comparative example tires Ref.1-Ref.2 and Working example tires Ex.1-Ex.3) and tested for turning performance and wet performance.

Specifications common to all the test tires and test methods are as follows.

### < Turning performance test >

The test tires were attached to a 250cc motorcycle under the following conditions:
Tire size: Front 110/70-13M/C, Rear 130/70-13M/C
Rim size: Front 13x3.00MT, Rear 13x3.50MT
Pressure: Front 200 kPa, Rear 220 kPa

Then, the motorcycle was run on a dry asphalt-paved road of a test course. During running, the test rider evaluated turning performance into ten ranks based on the easiness of initiating a turn and the stability during turning or cornering.

The results are indicated in Table 1, wherein the larger the number, the better the turning performance.

### < Wet performance test >

When the above-mentioned motorcycle was running on a wet asphalt-paved road, full braking was applied without locking the brake by the test rider, and the distance traveled during deceleration from 40 km/h to 10 km/h was measured. As the test results, the reciprocal of the travel distance is indicated in Table 1 by an index based on Comparative example Ref.1 being 100, wherein the larger the number, the better the wet performance.

**Table 1**

| tire | Ref.1 | Ref.2 | Ex.1 | Ex.2 | Ex.3 |
|---|---|---|---|---|---|
| θc (deg.) | 70 | 70 | 30 | 42 | 30 |
| θs (deg.) | 70 | 70 | 53 | 45 | 53 |
| tan δi @0deg C | 1.0 | 0.8 | 1.2 | 1.2 | 1.2 |
| tan δo @0deg C | 1.0 | 0.8 | 0.7 | 0.7 | 0.7 |
| tan δi @70deg C | 0.25 | 0.28 | 0.25 | 0.25 | 0.3 |
| tan δo @70deg C | 0.25 | 0.28 | 0.3 | 0.3 | 0.25 |
| Tg1 (deg C) | -18 | -15 | -20 | -20 | -13 |
| Tg2 (deg C) | -18 | -15 | -13 | -13 | -20 |
| E*i@0deg C/E*o@0deg C | 1.0 | 1.0 | 0.59 | 0.59 | 1.68 |
| Turning performance | 3.0 | 4.0 | 8.5 | 6.0 | 7.0 |
| Wet performance | 100 | 80 | 110 | 110 | 95 |

From the test results, it was confirmed that the tires according to the present invention had excellent wet performance and turning performance.

### DESCRIPTION OF THE REFERENCE SIGNS

- 1: motorcycle tire
- 6: carcass
- 8: band
- 8A: jointless band ply
- 9: tread rubber
- 10: carcass cord
- 12A: outer carcass ply
- 12B: inner carcass ply
- Cr: crown region
- Sh: shoulder region

## Claims

1. A motorcycle tire (1) comprising:
a tread portion (2) having a pair of tread edges (Te) and a tread surface (2a) therebetween, and comprising a crown region (Cr) including a tire equator (C) and a pair of shoulder regions (Sh) respectively including the tread edges (Te);
a pair of axially spaced bead portions (4);
a pair of sidewall portions (3) extending from the tread edges (Te) to the bead portions (4);
a bias-ply carcass (6) extending between the bead portions (4) through the tread portion (2) and the sidewall portions (2), and comprising a plurality of carcass plies (12) of carcass cords (10), including an outer carcass ply (12A) which is radially outermost in the tread portion (2) in the carcass plies (12);
a band (8) disposed radially outside the carcass (6) in the tread portion (2), and comprising a jointless band ply (8A) composed of at least one band cord (11) wound spirally and circumferentially of the tire (1) at 5 degrees or less with respect to the tire circumferential direction; and
a tread rubber (9) disposed radially outside the band (8),
**characterized in that**
a loss tangent of the tread rubber (9) at a temperature of 0 deg C is larger in the crown region (Cr) than in the shoulder regions (Sh), wherein the loss tangent is measured under the conditions frequency 5 Hz, initial strain 10%, and dynamic strain +/-2.5%, and
angles of the carcass cords (10) of the outer carcass ply (12A) with respect to the tire circumferential direction are smaller in the crown region (Cr) than in the shoulder regions (Sh).

2. The motorcycle tire (1) according to claim 1, wherein
the angles of the carcass cords (10) of the outer carcass ply (12A) with respect to the tire circumferential direction are in a range from 20 to 65 degrees.

3. The motorcycle tire (1) according to claim 1 or 2, wherein
the shoulder regions (Sh) extend axially inwardly from the respective tread edges (Te) by at least 20 mm when measured along the tread surface (2a).

4. The motorcycle tire (1) according to claim 1, 2 or 3, wherein
a loss tangent of the tread rubber (9) at a temperature of 70 deg C is smaller in the crown region (Cr) than in the shoulder regions (Sh), wherein the loss tangent is measured under the conditions frequency 5 Hz, initial strain 10%, and dynamic strain +/-2.5%.

5. The motorcycle tire (1) according to any one of claims 1 to 4, wherein
the glass-transition temperature (Tg) of the tread rubber is in a range from -20 deg C to 5 deg C, wherein the glass-transition temperature is measured according to Japanese Industrial Standard JIS-K7121 while raising the temperature at a heating rate of 10 deg C/min.

6. The motorcycle tire (1) according to any one of claims 1 to 5, wherein
the glass-transition temperature (Tg) of the tread rubber (9) is lower in the crown region (Cr) than in the shoulder regions (Sh).

7. The motorcycle tire (1) according to any one of claims 1 to 6, wherein
a complex elastic modulus of the tread rubber (9) at a temperature of 0 deg is smaller in the crown region (Cr) than in the shoulder regions (Sh) wherein the complex elastic modulus is measured under the conditions frequency 5 Hz, initial strain 10%, and dynamic strain +/-2.5%.

8. The motorcycle tire (1) according to claim 7, wherein
the ratio (E*i at 0 deg C / E*o at 0 deg C) of the complex elastic modulus E*i of the tread rubber (9) at 0 deg C in the crown region (Cr) to the complex elastic modulus E*o of the tread rubber (9) at 0 deg C in the shoulder regions (Sh), is not more than 0.95.

9. The motorcycle tire (1) according to any one of claims 1 to 8, wherein
the ratio (θc / θs) of the angle θc of the carcass cords (10) in the crown region (Cr) to the angle θs of the carcass cords (10) in the shoulder regions (Sh), is in a range from 0.35 to 0.90.

10. The motorcycle tire (1) according to any one of claims 1 to 9, wherein
The tread rubber (9) contains silica.

11. The motorcycle tire (1) according to any one of claims 1 to 10, wherein
the outer carcass ply (12A) extends between the bead portions (4) without being turned up in the bead portions (4).

12. The motorcycle tire (1) according to any one of claims 1 to 11, wherein
the carcass plies (12) include an inner carcass ply (12B) which is, in the tread portion (2), positioned on the radially inside of the outer carcass ply (12A), and
the inner carcass ply (12B) extends between the bead portions (4) and is turned up in each bead portion (4) around a bead core (5) disposed therein from the inside to the outside in the tire axial direction so as to form a pair of turnup portions (16b) and a main portion (16a) therebetween.

## Patentansprüche

1. Motorradreifen (1), umfassend:
einen Laufflächenabschnitt (2), der ein Paar Laufflächenkanten (Te) und eine Laufflächenoberfläche (2a) dazwischen aufweist und einen Kronenbereich (Cr), der einen Reifenäquator (C) enthält, und ein Paar Schulterbereiche (Sh), die jeweils die Laufflächenkanten (Te) enthalten, umfasst;
ein Paar axial beabstandete Wulstabschnitte (4);
ein Paar Seitenwandabschnitte (3), die sich von den Laufflächenkanten (Te) zu den Wulstabschnitten (4) erstrecken;
eine Diagonallagenkarkasse (6), die sich zwischen den Wulstabschnitten (4) durch den Laufflächenabschnitt (2) und die Seitenwandabschnitte (2) erstreckt und eine Vielzahl von Karkasslagen (12) aus Karkasskorden (10) umfasst, die eine äußere Karkasslage (12A), die in dem Laufflächenabschnitt (2) in den Karkasslagen (12) radial am weitesten außen liegt, enthält;
ein Band (8), das radial außerhalb der Karkasse (6) in dem Laufflächenabschnitt (2) angeordnet ist und eine fugenlose Bandlage (8A) umfasst, die aus mindestens einem Bandkord (11) zusammengesetzt ist, der spiralförmig und in Umfangsrichtung des Reifens (1) unter 5 Grad oder weniger in Bezug auf die Reifenumfangsrichtung gewickelt ist; und
einen Laufflächengummi (9), der radial außerhalb des Bandes (8) angeordnet ist,
**dadurch gekennzeichnet, dass**
ein Verlusttangens des Laufflächengummis (9) bei einer Temperatur von 0 Grad C im Kronenbereich (Cr) größer ist als in den Schulterbereichen (Sh), wobei der Verlusttangens unter den Bedingungen Frequenz 5 Hz, Anfangsdehnung 10 % und dynamische Dehnung +/- 2,5 % gemessen wird, und
Winkel der Karkasskorde (10) der äußeren Karkasslage (12A) in Bezug auf die Reifenumfangsrichtung in dem Kronenbereich (Cr) kleiner sind als in den Schulterbereichen (Sh).

2. Motorradreifen (1) nach Anspruch 1, wobei die Winkel der Karkasskorde (10) der äußeren Karkasslage (12A) in Bezug auf die Reifenumfangsrichtung in einem Bereich von 20 bis 65 Grad liegen.

3. Motorradreifen (1) nach Anspruch 1 oder 2, wobei sich die Schulterbereiche (Sh) von den jeweiligen Laufflächenkanten (Te) um mindestens 20 mm, gemessen entlang der Laufflächenoberfläche (2a), axial nach innen erstrecken.

4. Motorradreifen (1) nach Anspruch 1, 2 oder 3, wobei ein Verlusttangens des Laufflächengummis (9) bei einer Temperatur von 70 °C im Kronenbereich (Cr) kleiner ist als in den Schulterbereichen (Sh), wobei der Verlusttangens unter den Bedingungen Frequenz 5 Hz, Anfangsdehnung 10 % und dynamische Dehnung +/- 2,5 % gemessen wird.

5. Motorradreifen (1) nach einem der Ansprüche 1 bis 4, wobei die Glasübergangstemperatur (Tg) des Laufflächengummis in einem Bereich von -20°C bis 5°C liegt, wobei die Glasübergangstemperatur gemäß dem japanischen Industriestandard JIS-K7121 gemessen wird, während die Temperatur mit einer Erwärmungsrate von 10°C/min erhöht wird.

6. Motorradreifen (1) nach einem der Ansprüche 1 bis 5, wobei die Glasübergangstemperatur (Tg) des Laufflächengummis (9) im Kronenbereich (Cr) niedriger ist als in den Schulterbereichen (Sh).

7. Motorradreifen (1) nach einem der Ansprüche 1 bis 6, wobei ein komplexer Elastizitätsmodul des Laufflächengummis (9) bei einer Temperatur von 0 Grad im Kronenbereich (Cr) kleiner ist als in den Schulterbereichen (Sh), wobei der komplexe Elastizitätsmodul unter den Bedingungen Frequenz 5 Hz, Anfangsdehnung 10 % und dynamische Dehnung +/- 2,5 % gemessen wird.

8. Motorradreifen (1) nach Anspruch 7, wobei das Verhältnis (E*i bei 0 Grad C / E*o bei 0 Grad C) des komplexen Elastizitätsmoduls E*i des Laufflächengummis (9) bei 0 Grad C im Kronenbereich (Cr) zu dem komplexen Elastizitätsmodul E*o des Laufflächengummis (9) bei 0 Grad C in den Schulterbereichen (Sh) nicht mehr als 0,95 beträgt.

9. Motorradreifen (1) nach einem der Ansprüche 1 bis 8, wobei das Verhältnis (θc / θs) des Winkels θc der Karkasskorde (10) im Kronenbereich (Cr) zum Winkel θs der Karkasskorde (10) in den Schulterbereichen (Sh) in einem Bereich von 0,35 bis 0,90 liegt.

10. Motorradreifen (1) nach einem der Ansprüche 1 bis 9, wobei der Laufflächengummi (9) Silica enthält.

11. Motorradreifen (1) nach einem der Ansprüche 1 bis 10, wobei sich die äußere Karkasslage (12A) zwischen den Wulstabschnitten (4) erstreckt, ohne dass sie in den Wulstabschnitten (4) umgeschlagen ist.

12. Motorradreifen (1) nach einem der Ansprüche 1 bis 11, wobei
die Karkasslagen (12) eine innere Karkasslage (12B) umfassen, die in dem Laufflächenabschnitt (2) an der radialen Innenseite der äußeren Karkasslage (12A) angeordnet ist, und
die innere Karkasslage (12B) sich zwischen den Wulstabschnitten (4) erstreckt und in jedem Wulstabschnitt (4) um einen darin angeordneten Wulstkern (5) von der Innenseite zur Außenseite in der axialen Richtung des Reifens umgeschlagen ist, um ein Paar Umschlagabschnitte (16b) und einen Hauptabschnitt (16a) dazwischen zu bilden.

## Revendications

1. Pneumatique pour motocyclette (1) comprenant :
une portion formant bande de roulement (2) ayant une paire de bords de bande de roulement (Te) et une surface de bande de roulement (2a) entre ceux-ci, et comprenant une région de couronne (Cr) incluant un équateur de pneumatique (C) et une paire de régions d'épaulement (Sh) incluant respectivement les bords de bande de roulement (Te) ;
une paire de portions de talon axialement espacées (4) ;
une paire de portions formant parois latérales (3) s'étendant depuis les bords de bande de roulement (Te) jusqu'aux portions de talon (4) ;
une carcasse à nappe diagonale (6) s'étendant entre les portions de talon (4) à travers la portion formant bande de roulement (2) et les portions formant parois latérales (2), et comprenant une pluralité de nappes de carcasse (12) en câblés de carcasse (10), incluant une nappe de carcasse extérieure (12A) qui est radialement la plus à l'extérieur dans la portion formant bande de roulement (2) dans les nappes de carcasse (12) ;
une bande (8) disposée radialement à l'extérieur de la carcasse (6) dans la portion formant bande de roulement (2), et comprenant une nappe de bande sans joint (8A) composée d'au moins un câblé de bande (11) enroulé en spirale et circonférentiellement du pneumatique (1) sous 5 degrés ou moins par rapport à la direction circonférentielle du pneumatique ; et
un caoutchouc de bande de roulement (9) disposé radialement à l'extérieur de la bande (8),
**caractérisé en ce que**
une tangente de perte du caoutchouc de bande de roulement (9) à une température de 0 degré C est plus grande dans la région de couronne (Cr) que dans les régions d'épaulement (Sh), la tangente de perte étant mesurée dans les conditions d'une fréquence de 5 Hz, d'une contrainte initiale de 10 %, et d'une contrainte dynamique de ± 2,5 %, et
des angles des câblés de carcasse (10) de la nappe de carcasse extérieure (12A) par rapport à la direction circonférentielle du pneumatique sont plus petits dans la région de couronne (Cr) que dans les régions d'épaulement (Sh).

2. Pneumatique pour motocyclette (1) selon la revendication 1, dans lequel les angles des câblés de carcasse (10) de la nappe de carcasse extérieure (12A) par rapport à la direction circonférentielle du pneumatique sont dans une plage allant de 20 à 65 degrés.

3. Pneumatique pour motocyclette (1) selon la revendication 1 ou 2, dans lequel
les régions d'épaulement (Sh) s'étendent axialement vers l'intérieur depuis les bords de bande de roulement respectifs (Te) à raison d'au moins 20 mm, mesurées le long de la surface de bande de roulement (2a).

4. Pneumatique pour motocyclette (1) selon la revendication 1, 2 ou 3, dans lequel
une tangente de perte du caoutchouc de bande de roulement (9) à une température de 70 degrés C est plus petite dans la région de couronne (Cr) que dans les régions d'épaulement (Sh), la tangente de perte étant mesurée dans les conditions d'une fréquence de 5 Hz, d'une contrainte initiale de 10 %, et d'une contrainte dynamique de ± 2,5 %.

5. Pneumatique pour motocyclette (1) selon l'une quelconque des revendications 1 à 4, dans lequel
une température de transition vitreuse (Tg) du caoutchouc de bande de roulement est dans une plage allant de -20 degrés C à 5 degrés C, la température de transition vitreuse étant mesurée conformément à la norme industrielle japonaise JIS-K7121 tout en augmentant la température à un vitesse de chauffe de 10 degrés C/min.

6. Pneumatique pour motocyclette (1) selon l'une quelconque des revendications 1 à 5, dans lequel
la température de transition vitreuse (Tg) du caoutchouc de bande de roulement (9) est plus basse dans la région de couronne (Cr) que dans les régions d'épaulement (Sh).

7. Pneumatique pour motocyclette (1) selon l'une quelconque des revendications 1 à 6, dans lequel
un module d'élasticité complexe du caoutchouc de bande de roulement (9) à une température de 0 degré C est plus petit dans la région de couronne (Cr) que dans les régions d'épaulement (Sh),
le module d'élasticité complexe étant mesuré dans les conditions d'une fréquence de 5 Hz, d'une contrainte initiale de 10 %, et d'une contrainte dynamique de ± 2,5 %.

8. Pneumatique pour motocyclette (1) selon la revendication 7, dans lequel le rapport (E*i à 0 degré C / E*o à 0 degré C) du module d'élasticité complexe E*i du caoutchouc de bande de roulement (9) à 0 degré C dans la région de couronne (Cr) sur le module d'élasticité complexe E*o du caoutchouc de bande de roulement (9) à 0 degré C dans les régions d'épaulement (Sh) n'est pas supérieur à 0,95.

9. Pneumatique pour motocyclette (1) selon l'une quelconque des revendications 1 à 8, dans lequel
le rapport (θc / θs) de l'angle θc des câblés de carcasse (10) dans la région de couronne (Cr) sur l'angle θs des câblés de carcasse (10) dans les régions d'épaulement (Sh) est dans une plage allant de 0,35 à 0,90.

10. Pneumatique pour motocyclette (1) selon l'une quelconque des revendications 1 à 9, dans lequel
le caoutchouc de bande de roulement (9) contient de la silice.

11. Pneumatique pour motocyclette (1) selon l'une quelconque des revendications 1 à 10, dans lequel
la nappe de carcasse extérieure (12A) s'étend entre les portions de talon (4) sans être retroussée dans les portions de talon (4).

12. Pneumatique pour motocyclette (1) selon l'une quelconque des revendications 1 à 11, dans lequel
les nappes de carcasse (12) incluent une nappe de carcasse intérieure (12B) qui est, dans la portion formant bande de roulement (2), positionnée sur le côté radialement intérieur de la nappe de carcasse extérieure (12A), et
la nappe de carcasse intérieure (12B) s'étend entre les portions de talon (4) et est retroussée dans chaque portion de talon (4) autour d'une âme de talon (5) disposée à l'intérieur de celle-ci depuis l'intérieur jusqu'à l'extérieur dans la direction axiale du pneumatique de manière à former une paire de portions retroussées (16b) et une portion principale (16a) entre celles-ci.
